# EUROPÄISCHE PATENTSCHRIFT

(11) **EP 4 244 707 B1**
(45) Veröffentlichungstag und Bekanntmachung des Hinweises auf die Patenterteilung: **17.01.2024**
(21) Anmeldenummer: 22830815.1
(22) Anmeldetag: 07.12.2022
(51) Int. Cl.: G06F 3/041, G06F 3/0482, B60K 35/00, G06F 3/038, G06F 3/04842, G06F 3/04883, G06F 3/01

(54) **VERFAHREN ZUR AUSWERTUNG VON BEDIENGESTEN AUF EINER BERÜHRUNGSEMPFINDLICHEN EINGABEFLÄCHE UND ZUGEHÖRIGE VORRICHTUNG**
METHOD FOR EVALUATING CONTROL GESTURES ON A TOUCH-SENSITIVE INPUT SURFACE AND ASSOCIATED DEVICE
PROCÉDÉ D'ÉVALUATION DE GESTES DE COMMANDE SUR UNE SURFACE D'ENTRÉE TACTILE ET DISPOSITIF ASSOCIÉ

(30) Priorität: 25.01.2022 DE 102022000261
(43) Veröffentlichungstag der Anmeldung: 20.09.2023
(73) Patentinhaber: Mercedes-Benz Group AG, 70372 Stuttgart (DE)
(72) Erfinder: MÖRZ, Sebastian, 71063 Sindelfingen (DE)
(74) Vertreter: Novagraaf Group
(86) Internationale Anmeldenummer: PCT/EP2022/084738
(87) Internationale Veröffentlichungsnummer: WO 2023/143791

(56) Entgegenhaltungen:
- US-A1- 2007 152 976
- US-A1- 2013 009 896
- US-B1- 8 970 525

## Beschreibung

Die Erfindung betrifft ein Verfahren zur Auswertung von Bediengesten auf einer berührungsempfindlichen Eingabefläche zur Steuerung eines zur Selektion eines Objekts ausgebildeten Anzeigeelements auf einer der Eingabefläche zugeordneten Anzeigeeinheit sowie eine Vorrichtung mit Mitteln zur Auswertung von Bediengesten auf einer berührungsempfindlichen Eingabefläche.

Bekannt ist eine berührungsempfindliche Eingabefläche an Laptops oder in Fahrzeugen, mittels der ein Anzeigeelement auf einer zugeordneten, räumlich abgesetzten Anzeigeeinheit steuerbar ist. Das beispielsweise als Cursor ausgebildete Anzeigeelement ist zur Selektion von Objekten eingerichtet, wobei dabei ohne weitere Schritte oder nach Ausführung einer weiteren Bedienungshandlung, beispielsweise ein Auslösen einer Schaltfunktion durch Ausübung eines erhöhten Druckes auf die Eingabefläche, einer dem Objekt zugeordnete Funktion ausgelöst wird.

In der Patentschrift US 8,970,525 B1 ist ein Verfahren zur Abschwächung eines vom Nutzer nicht beabsichtigten Springens oder Wackelns eines Cursors auf einer Anzeigeeinheit bei einer Eingabe auf einer berührungsempfindlichen Oberfläche offenbart. Zu einer von einem Nutzer ausgeführten Geste werden Eingabepositionen umfassende charakteristische Daten ermittelt, die zur Bestimmung von Ansteuersignalen zur Steuerung des Cursors an der Anzeigeeinheit zugrunde gelegt werden. Mit Erkennung eines abnehmenden Druckes auf die Eingabefläche wird ein abhebender Finger detektiert und eine Bewegung des Anzeigeelementes auf der zugeordneten Anzeigeeinheit blockiert.

Aus der US 2013/009896 A1 ist eine berührempfindliche Oberfläche bekannt, wobei der berührempfindlichen Oberfläche eine Auswerteeinheit zur Bestimmung charakteristischen Daten einer Fingerhaltung zugeordnet ist. Die Ausgabe von unzuverlässigen charakteristischen Daten, die durch ein Aufsetzen eines Fingers nach einem Abhebevorgang bewirkt sind, wird für eine vorgegebene Zeitdauer unterdrückt.

Die US 2007/152976 A1 offenbart ein Verfahren zur Auswertung von Bedienhandlungen auf einem berührungsempfindlichen Bildschirm zur Steuerung eines Objektes wie beispielsweise einem Cursor, bei dem eine Berührposition und zugehöriger Konfidenzwert ermittelt werden. Für den Fall, dass ein ermittelter Konfidenzwert einen vorgegebenen Schwellwert nicht erreicht, wird die Bedienhandlung ignoriert und bewirkt keine Ansteuerung des Objektes.

Aufgabe der Erfindung ist es demgegenüber ein Verfahren und eine Vorrichtung bereitzustellen, bei denen ein unbeabsichtigtes Auswählen und/oder Selektieren von mittels Gesten ausgewählten Objekten vermieden wird.

Die Aufgabe wird durch ein Verfahren zur Auswertung von Bediengesten auf einer berührungsempfindlichen Eingabefläche zur Steuerung eines zur Selektion eines Objekts ausgebildeten Anzeigeelements auf einer der Eingabefläche zugeordneten Anzeigeeinheit mit den Merkmalen des Anspruchs 1 sowie einer Vorrichtung gemäß des Anspruchs 9 gelöst. Die abhängigen Ansprüche definieren bevorzugte und vorteilhafte Ausführungsformen der vorliegenden Erfindung.

Bei dem Verfahren werden der Bediengeste zugehörigen charakteristischen Daten ausgewertet und die Geste hinsichtlich eines Fehlergrads mittels einem vortrainierten Algorithmus klassifiziert, wobei erfindungsgemäß sofern der Fehlergrad unterhalb einem vorgegebenen Schwellwert liegt, die aus den charakteristischen Daten der Geste bestimmten Ansteuersingale fortlaufend an die Anzeigeeinheit übermittelt werden und sofern der Fehlergrad in einem Zeitraum von t2 bis t3 mit t1<t2<t3≤tend oberhalb dem vorgegebenen Schwellwert liegt, die Übermittlung der im Zeitraum von t2 t3 bestimmten Ansteuersignale an die Anzeigeeinheit ausgesetzt wird.

Mit einer ausreichenden Anzahl von Eingabepositionen, d.h. von Positionsdaten als xy-Koordinaten als charakteristische Daten lässt sich anhand des Verlaufs eine Art bzw. ein Typ einer Geste vorhersagen und/oder bestimmen. Als Geste sind im Wesentlichen Wischgesten auf der Eingabefläche zu verstehen. Zur Klassifizierung der Geste oder einem Teil der Geste wird mittels des vortrainierten Algorithmus aus den charakteristischen Daten eine aus historischen Daten erlernte Klassifizierung des bestimmten Typs ermittelt. Neben den Eingabepositionen können die charakteristischen Daten der Geste beispielsweise weiter eine Fingerauflagefläche, eine Fingerauflageflächenänderung, eine Fingerauflagerkraft, eine Fingerauflagekraftänderung, eine Fingerbeweggeschwindigkeit oder Fingerbewegungsgeschwindigkeitsänderung umfassen. Liegt bei der Geste noch kein oder ein unterhalb dem vorgegebenen Schwellwert liegender Fehlergrad vor, dann werden die bestimmten Ansteuersingale fortlaufend zur Steuerung des Anzeigeelements an die Anzeigeeinheit ausgegeben. Unter einer fortlaufenden Übermittlung ist dabei zu verstehen, dass erzeugte Ansteuersignale ohne signifikante Verzögerung, d.h. beispielsweise in dem Rechenzyklus der Erstellung oder in dem auf die Erstellung folgenden Rechenzyklus an die Anzeigeeinheit übermittelt werden. Der Fehlergrad gibt dabei die Zuverlässigkeit der ermittelten Positionsdaten wieder, ein niedriger Fehlergrad steht für eine hohe Zuverlässigkeit und umgekehrt. Das Anzeigeelement zur Selektion umfasst beispielsweise ein auf ein Objekt zeigenden Cursor, eine Aufhellung und/oder des das Objekt umgebenden Bereichs.

Sobald zum Zeitpunkt t2 erkannt wird, dass die Geste eine über dem vorgegebenen Schwellwert liegenden Fehlergrad aufweist, wird die Übermittlung der im Zeitraum von t2 bis t3 bestimmten Ansteuersignale ausgesetzt. Die auf den Eingabepositionen aufbauenden Ansteuersignale werden kontinuierlich weiterberechnet aber nicht an die Ausgabeeinheit übermittelt solange nicht bei einem Zeitpunkt t2`<t3 ein Timer abgelaufen ist oder der Fehlergrad zum Zeitpunkt t2`=t3 wieder oberhalb dem vorgegebenen Schwellwert liegt. Nach t2`, d.h. spätestens nach t3 werden die Ansteuersignale dann wieder bis tend an die Anzeigeeinheit ausgegeben. Der Zeitraum zwischen t2 und t2` ist in Abhängigkeit des Fehlergrades anpassbar, bei hohen Fehlergraden gilt demnach t2`=t3. Der Zeitpunkt t2` kann auch mit tend zusammenfallen sofern gilt t2`=t3 und t3=tend, in diesem Fall werden ab dem Zeitpunkt t2 keine weiteren Ansteuersignale ausgegeben und der Cursor auf der Anzeigeeinheit verbleibt bis zum Gestenende auf der zum Zeitpunkt t2 eingestellten Position.

Die Ansteuersignale werden aus Verschiebevektoren bestimmt. Aus den detektieren Eingabepositionen werden Verschiebevektoren berechnet und aufsummiert, deren Richtung und Länge der Bewegung mit internen Schwellwerten verglichen wird. Bei Überschreitung dieser Schwellwerte werden die Ansteuersignale entsprechend der berechneten Bewegung generiert. Die Ansteuersignale können dabei Anpassungen auf Basis von Filtern und geometrischen Parametern sowie Anpassungen an die jeweilige Ausgabeeinheit beinhalten. Zur Bestimmung der Ansteuersignale werden zu einem beliebigen Zeitpunkt entsprechend vorhandenere Zwischenspeicherkapazitäten mehrere vor diesem Zeitpunkt liegende Eingabepositionen, vorzugsweise alle Eingabepositionen ab Start der Geste, berücksichtigt, so dass unplausible Eingabepositionen zur Bestimmung der Ansteuersignale über die entsprechenden Filter ausgefiltert werden können. Je länger die Übermittlung der im Zeitraum von t2 bis t2'≤t3 bestimmten Ansteuersignale ausgesetzt wird, desto mehr Eingabepositionen stehen den Filtern und Auswertealgorithmen zur Bestimmung der Ansteuersignale zur Verfügung, so dass unplausible Eingabepositionen und Ausreißer weniger ins Gewicht fallen oder eliminiert werden können.

Das Verfahren eignet sich insbesondere für Eingabeflächen, bei denen aufgrund ihrer geometrischen Anordnung beim Ausüben der Bediengeste ein Verkippen, Abrollen oder eine Druckänderung des Bedienfingers verbunden ist. Eine an einem Lenkrad angeordnete Eingabefläche wird üblicherweise mit einem Daumen bedient. Die Hand eines Nutzers umfasst dabei den Lenkradkranz, der Daumen zur Bedienung wird zur Ausführung von Gesten relativ zur Hand bewegt. Durch Verkippen und/oder Veränderung des Anpressdrucks ändert sich die Auflagefläche des Daumens. Aus der Auflagefläche werden beispielsweise über Bestimmung des Flächenschwerpunktes Koordinaten der Berührposition, d.h. die Positionsdaten ermittelt. Die mit Veränderung der Auflagefläche verbundene Änderung der Berührposition überlagert sich dabei der durch Verschieben des Daumens bewirkten Änderung der Berührposition, wodurch auf der Anzeigeeinheit unabsichtlich Objekte selektiert und/oder zugehörige Funktionen ausgelöst werden.

In weiterer Ausgestaltung des Verfahrens werden die Daten der Geste von einem mit Bediengesten vorab trainierten, als neuronales Netzwerk ausgebildeten Algorithmus ausgewertet und klassifiziert. Ein den Algorithmus umfassendes Modell ist vortrainiert mit Bediengesten, wobei ein den Bediengesten zugehöriger Fehlergrad erlernt wird. Hierzu werden alle möglichen Arten von Bediengesten auf der Eingabefläche eingegeben und solange trainiert, bis mit ausreichender Zuverlässigkeit jeder Geste ein Fehlergrad zuordenbar ist. Im einfachsten Fall werden jeder Geste nur zwei Zustände als Fehlergrad beispielsweise 0 für einen zuverlässigen und 1 für einen unzuverlässigen Wert vergeben. In einer modifizierten Ausführungsform wird eine feinere Abstufung von Fehlegraden mit Werten zwischen 0 und 1 ermittelt und ausgewertet.

Mit dem neuronalen Algorithmus werden neben den reinen Positionsdaten einer Geste weitere Daten wie die Fingerauflagefläche, eine Fingerauflagekraft, eine Fingerbeweggeschwindigkeit und/oder ein Geschwindigkeitsgradient als Eingangsdaten im Training berücksichtigt, wodurch eine Klassifizierung hinsichtlich des Fehlegrades erheblich verfeinert wird. Ein implementiertes Modell liefert dann nach Auswertung der vorgenannten charakteristischen Daten der Bediengeste eine zugehörige Klassifizierung.

In weiterer Ausgestaltung des Verfahrens wird der Zeitraum, in dem die Ansteuersignale zurückbehalten und nicht an die Anzeigeeinheit übermittelt werden, von t2 bis t2` mit t2'≤t3 desto größer gewählt, je größer der Fehlergrad der Geste ist. Ist der Fehlergrad maximal wird t2`=t3 gewählt und mit abnehmenden Fehlergrad reduziert. Das auf gelernten Daten basierende Modell wie das neuronal Netzwerk gibt bei eindeutiger Erkennung des Fehlergrades minimale bzw. maximale d.h. beispielsweise 0 oder 1 aus. Zwischenwerte kommen zustande, falls das Modell den Fehlergrad nicht eindeutig erkennt, alternativ können Gesten mit zugehörigen Zwischenwerten auch eintrainiert werden. In vorteilhafter Weise wird damit erreicht, dass die durch Zwischenspeicherung wahrgenommene Verzögerung der Bewegung des Anzeigeelementes auf der Ausgabeeinheit möglichst gering ist.

In einer weiteren bevorzugten Ausführungsform wird auf Basis der charakteristischen Daten der Bediengeste anhand den erlernten Daten eines als vortrainierten Algorithmus ausgeführten Modells neben einem Fehlergrad eine Bewegungsrichtung klassifiziert. Hierzu wird das Modell solange trainiert, bis mit ausreichender Zuverlässigkeit anhand den Daten, d.h. xy-Wert der Eingabeposition, Auflagefläche und Kraft etc. jeder Geste ein Fehlergrad und eine Richtung zuordenbar ist.

Der Vergleich der von dem Modell ermittelten und der realen aus den Eingabepositionen POS ermittelten Bewegungsrichtung ermöglicht eine weitere Differenzierung bei der Bestimmung des Zeitraums von t2 bis t2`.

In einer vorteilhaften Weiterbildung wird bei einem ermittelten Fehlergrad oberhalb dem vorgegebenen Schwellwert und bei einer aus den erlernten Daten ermittelten Bewegungsrichtung, die der tatsächlichen aus den Eingabepositionen ermittelten Bewegungsrichtung entspricht, der Zeitraum zur Zurückhaltung der Ansteuersignale von t2 bis t3 bzw. von t2 bis t2` reduziert. In vorteilhafter Weise ist damit eine Verzögerung zwischen Gesteneingabe und zugehöriger Bewegung des Anzeigeelementes auf der Anzeigeeinheit veminderbar.

In einer weiteren Ausbildungsform werden, sofern der ermittelte Fehlergrad oberhalb dem vorgegebenen Fehlergrad liegt und die von dem vortrainierten Algorithmus ausgegebene der aus den Eingabepositionen POS(t1) bis POS(tend) ermittelten Bewegungsrichtung entgegengesetzt ist, die Ansteuersignale im Zeitraum von t2 bis t2`=t3 zurückgehalten. Ab dem Zeitpunkt t2 werden solange der ermittelte Fehlergrad oberhalb dem vorgegebenen Fehlergrad liegt keine Ansteuersignale ausgegeben. In vorteilhafter Weise lässt sich damit die unabsichtliche Selektion von Objekten weiter reduzieren.

In weitere Ausgestaltung des Verfahrens wird sofern vom als Modell ausgebildeten vortrainierten Algorithmus ausgegebene Bewegungsrichtung eindeutig ist, die aus den Eingabepositionen POS(t1) bis POS(tend) ermittelte Bewegungsrichtung durch die vom vortrainierten Algorithmus erkannte Bewegungsrichtung überschrieben. Eine eindeutige Erkennung der Bewegungsrichtung liegt vor, wenn der von dem Modell ausgegebene Wert für die Bewegungsrichtung über einem Mindestzuverlässigkeitswert liegt. Bei einer Bewegungsrichtungserkennung steht 0 beispielweise für eine maximal zuverlässige und 1 für eine unzuverlässige Erkennung. Die Zurückhaltung der Ansteuersignale im Zeitraum von t2 bis t2` kann bei einer durch das Modell zuverlässig erkannten Bewegungsrichtung in Abhängigkeit des Fehlergrades ohne Berücksichtigung der aus den Eingabepositionen POS(t1) bis POS(tend) ermittelten Bewegungsrichtung angepasst werden.

Die erfindungsgemäße Vorrichtung umfasst Mittel, die charakteristische Daten eine Geste auswerten und die Geste fortlaufend anhand einem vortrainierten Algorithmus hinsichtlich eines Fehlergrads klassifizieren, wobei solange der Fehlergrad unterhalb einem vorgegebenen Schwellwert liegt, die Mittel Ansteuersignale aus den Eingabepositionen von POS(t1) bis POS(tend) bestimmen und fortlaufend zur Steuerung des Anzeigeelements an die Anzeigeeinheit übermitteln, die Mittel bei Erkennung eines oberhalb dem vorgegebenen Schwellwert liegenden Fehlergrades im Zeitraum von t2 bis t3 mit t1<t2<t3≤tend die Übermittlung der im Zeitraum von t2 bis t2'≤t3 bestimmten Ansteuersignale aussetzen. Die Übermittlung der Ansteuersignale an die Anzeigeeinheit wird nach dem Zeitpunkt t2` fortgesetzt. Die charakteristischen Daten der Geste umfassen neben den xy-Koordinaten der Eingabepositionen im Idealfall alle messbaren, die Geste beschreibenden Größen, d.h. Fingerauflagefläche und Veränderung, Ausführgeschwindigkeit, Geschwindigkeitsgradient, Fingerauflagekraft etc. In vorteilhafter Weise vermeidet die Erkennung einer Geste mit einem über dem Schwellwert liegenden Fehlergrad eine unbeabsichtigte Auswahl von Objekten.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale können für sich oder in beliebiger, sinnvoller Kombination den Gegenstand der Erfindung bilden, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen.

Dabei zeigen:
- Fig. 1: ein Ablaufdiagramm des erfindungsgemäßen Verfahrens,
- Fig. 2a bis 2h: beispielhafte Darstellungen von Abweichungen zwischen einem Nutzerwunsch und aus Eingabepositionen ermittelten Gestentrajektorien,
- Fig. 3: beispielhafte Geste im xy-Koordinatensystem und
- Fig. 4: Vorrichtung zur Ausführung des erfindungsgemäßen Verfahrens.

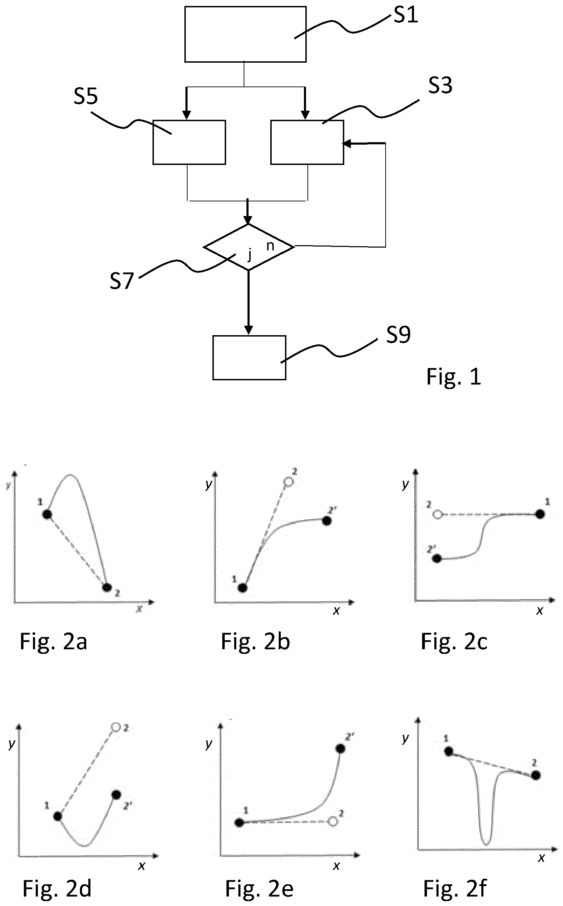

Gemäß Fig.1 werden in einem ersten Schritt S1 an einer berührungsempfindlichen Eingabefläche Eingabepositionen einer mit einem Berührmittel ausgeführten Geste ermittelt. Das Bedienmittel ist dabei beispielsweise ein Finger bzw. ein Daumen, die berührungsempfindliche Oberfläche ist als kapazitives Touchpad ausgeführt. Im Schritt S3 werden anhand den aus S1 empfangenen Eingabepositionen Verschiebevektoren umfassende Ansteuersignale zur Steuerung eines Cursors auf einer Anzeigeeinheit ermittelt.

Parallel werden im Schritt S5 die Eingabepositionen und vorzugsweise weitere Messdaten einem als neuronalen Netz ausgeführten Modell zugeführt. Die weiteren Messdaten umfassen eine Fingerauflagefläche, eine Beweggeschwindigkeit oder zugehörige Gradienten. Aus den Messdaten wird mittels dem mit historischen Daten vortrainierten neuronalen Netz ein Fehlergrad der Geste ermittelt und klassifiziert.

Im Schritt S7 wird der in S5 ermittelten Fehlegrads der Geste mit einem vorgegebenen Schwellwert verglichen. Liegt der Fehlergrad unter dem vorgegebenen Schwellwert, so wird von zuverlässigen Daten ausgegangen und aus den gemessenen Eingabepositionen bestimmten Ansteuersignale werden fortlaufend, d.h. vorzugsweise sofern die Ansteuersignale eine Mindestveränderung zum Vorgängersignal aufweisen, mit jedem Berechnungszyklus im Schritt S9 an eine Anzeigeeinheit zur Steuerung des Cursors weitergeleitet.

Bei einer unterhalb dem vorgegebenen Schwellwert liegenden Fehlergrad klassifizierten Geste in S5 wird abgeleitet, dass die an der Eingabefläche gemessenen Eingabepositionen mit den tatsächlichen gewünschten Fingerpositionen des Nutzers übereinstimmen, mit anderen Worten muss hierbei die Bewegung des Fingers im Wesentlichen ohne Veränderung der Auflagefläche und -kraft entlang gerader Linien ohne Verkippung erfolgen und frei von Artefakten sein, die durch physikalische Eigenschaften des Sensors, beispielsweise Randeffekte, hervorgerufen werden.

Wird im Schritt S5 ein oberhalb einem weiteren Schwellwert liegender Fehlergrad der Geste ermittelt, dann wird in Schritt 7 die Ausgabe von Ansteuersignalen an die Anzeigeeinheit unterdrückt, d.h. zurückgehalten und dem Schritt S3 zurückgeführt. Im Schritt S3 werden auf Basis der zurückgeführten Ansteuersignale mit neuen aus dem Schritt S1 erhaltenen Eingabepositionen neue Ansteuersignale berechnet. Die Ansteuersignale werden damit mit einer größeren Anzahl von Eingabepositionen berechnet, so dass sich vom Nutzerwunsch abweichende Eingabeposition oder Ausreißer ausfiltern lassen oder durch Mittelung nicht ins Gewicht fallen. Neu berechnete Ansteuersignale werden so lange zurückgehalten, bis der in S5 ermittelte Fehlergrad den vorgegebenen Schwellwert unterschreitet oder ein Timeout abgelaufen ist.

Typischerweise liefern neuronale Netze keine binären Ergebnisse, sondern einen Wert zwischen 0 und 1. Wird das Netz nun so trainiert, dass "0" dem unproblematischen (kleiner Fehlergrad=hohe Zuverlässigkeit) und "1" dem problematischen Zustand (hoher Fehlergrad=geringe Zuverlässigkeit) entspricht, lassen sich dazwischenliegende Werte als Grad der Zuverlässigkeit der empfangenen Sensordaten interpretieren. Über diese zusätzliche Information lässt sich z.B. der oben erwähnte Timeout bestimmen, um die Verzögerungen durch die unterdrückte Ausgabe durch Zwischenspeicherung von Signalen so gering wie möglich zu halten. Ein Ausgabewert nahe 0 würde somit einen kurzen Timeout, ein Wert nahe 1 einen langen Timeout ergeben.

In einem weiteren verfeinerten Ausführungsbeispiel ist das neuronale Netz nicht nur hinsichtlich Ausgabe einer Zuverlässigkeit, sondern anhand der zu einer Bediengeste erfassten Daten auch zur Ausgabe einer Bewegungsrichtung eines Eingabefingers vortrainiert und eingerichtet. Durch Vergleich der Richtungen, die durch das neuronale Netz und mittels erfasster Eingabepositionen jeweils erkannt werden, ist eine Dauer zur Zurückhaltung von Ansteuersignalen im Schritt S7 gezielter beeinflussbar.

Klassifiziert das neuronale Netz eine Bewegung mit einem hohen Fehlergrad als unzuverlässig und erkennt gleichzeitig eine Bewegungsrichtung, die nicht der aus den Eingabepositionen berechneten Richtung entspricht, dann werden die Ansteuersignalen zurückgehalten und nicht an die Anzeigeeinheit übermittelt, solange der Fehlergrad über dem vorgegebenen Schwellwert liegt.

Klassifiziert das neuronale Netz eine Bewegung als unzuverlässig, erkennt aber eine Bewegungsrichtung, die der aus den Eingabepositionen berechneten Richtung entspricht, muss die Ausgabe Ansteuersingale gegebenenfalls nicht oder nicht so lange unterdrückt werden. In Folge wird die Verzögerung auf der Anzeigeeinheit gering gehalten bei gleichzeitig vertretbarem Risiko für die Zuverlässigkeit.

Das neuronale Netz weist bei diesem Ausführungsbeispiel 5 Ausgänge auf und gibt nach Auswertung der einer Geste zugehörigen gemessenen Daten jeweils einen Wert von beispielsweise zwischen 0 und 1 für eine Gestenrichtung hoch, runter rechts und links sowie einen Wert für eine undefinierte Richtung.

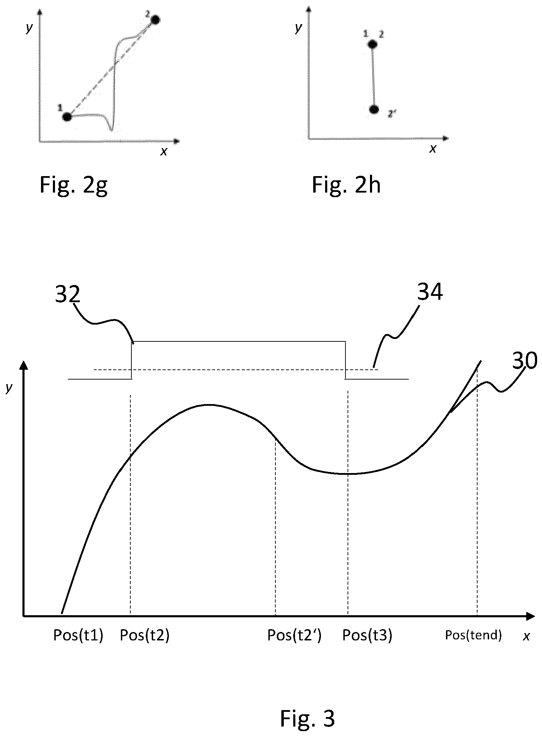

Die Figuren 2a bis 2h geben Fehlerfälle wieder, in denen der aus Positionsdaten ermittelt Koordinatenverlauf von der vom Nutzer beabsichtigten Fingertrajektorie abweicht. Diese Abweichung kommt durch Verkippung, Abrollen, Veränderung der Auflagekraft des Fingers auf der Eingabefläche und Artefakte des Sensors zustande. Die vom Nutzer gewünschte Fingerbewegung verläuft dabei immer entlang der gestrichelten Linie von Punkt 1 nach 2. Der aus Positionsdaten ermittelt Koordinatenverlauf verläuft entlang der durchgezogenen Linie von Punkt 1 nach 2 bzw. im Fall, dass der gewünschte und der aus Positionsdaten ermittelt Endpunkt voneinander abweichen, von Punkt 1 nach 2`. Im Folgenden sind die Fehlerfälle naher ausgeführt:
2a) Durch zu schnelles Aufsetzen des Fingers verformt sich die Fingerspitze derart, dass initial eine falsche Bewegungsrichtung erkannt wird und der Cursor springt nach oben anstatt statt wie gewünscht nach unten.
2b) Der Finger wischt über eine Sensorkante in y-Richtung hinaus und nur die Projektion in x-Richtung wird verarbeitet. Gegebenenfalls führen Randeffekte an der Sensorkante zu weiteren Verzerrungen, dadurch der Cursor springt horizontal statt vertikal oder gegebenenfalls gar nicht.
2c) Beim Überstreichen einer Fühlhilfe auf der Sensorfläche rutscht der Finger kurz ab und erzeugt eine zur gewünschten Richtung orthogonale Bewegung, dadurch springt der Cursor horizontal statt vertikal oder gegebenenfalls gar nicht.
2d) Führt der Nutzer beispielsweise auf der Eingabefläche mit dem Daumen einer ein Lenkradkranz umgreifenden Hand eine Geste von unten nach oben aus, dann gibt die Bewegung nach oben die beabsichtigte Fingertrajektorie vor, durch Abrollen und Verkippen des Daumens bei dieser Bewegung wandert der Flächenschwerpunkt der Auflagefläche nach unten, so dass die aus Positionsdaten ermittelt Bewegungsrichtung der beabsichtigten entgegengerichtet ist. Dadurch wird zumindest am Anfang der Bewegung die Richtung falsch erkannt, dadurch bewegt sich der Cursor gar nicht oder springt sogar nach unten.
2e) Der Nutzer führt eine horizontale Bewegung durch Rotation des Daumengelenks aus. Dadurch beschreibt der Finger eine geschwungene Trajektorie, die von der gewünschten geraden Linie abweicht, dadurch springt der Cursor orthogonal zur gewünschten Richtung.
2f und 2g) Ungünstig gewählte Parametrierung des Sensors führt dazu, dass die gemessene Fingerposition zwischen zwei festen Werten springt.
2h) Abrollen des Fingers bei Tastendruck führt zu scheinbarer Bewegung nach unten, dadurch spring der Cursor ungewollt nach unten.

Die Figur 3 gibt xy-Koordinaten von Eingabepositionen einer beispielhaften Geste 30 an einer Eingabefläche wieder. Zu einem Zeitpunkt t1 beginnt die Geste an Pos(t1) und endet zum Zeitpunkt tend an Pos(tend). Parallel zur Erfassung der Positionen wird der Verlauf der Geste anhand erlernter Daten, beispielsweise mit einem vortrainierten neuronalen Netzwerk, fortlaufend bezüglich einem durch den Graph 32 angedeuteten Fehlergrad bewertet. In vorliegendem Beispiel liegt der Fehlergrad der zwischen t1 bis t2 ermittelten Positionen, d.h. zwischen Pos(t1) bis Pos(t2) unterhalb einem vorgegeben Schwellwert 34, d.h. aus diesen Positionsdaten ermittelte Verschiebevektoren werden mit jedem Berechnungszyklus zur Steuerung eines Anzeigeelements fortlaufend an die Anzeigeeinheit übermittelt.

Im Zeitraum von t2 bis t3 übersteigt der Fehlergrad 32 den vorgegebenen Schwellwert 34. Je nach Höhe des Fehlergrades werden die in diesem Zeitraum ermittelten Eingabepositionen von t2 bis t2` oder maximal bis t3 zurückgehalten, in diesem Zeitraum werden Ansteuersignale zwar berechneten aber nicht an die Anzeigeeinheit ausgegeben. Ist der Fehlergrad hoch wie dargestellt, d.h. entweder 1 oder zumindest nahe 1, dann werden die Ansteuersignale bis t3 fortlaufend berechnet aber nicht ausgegeben, d.h. zurückgehalten. Je näher der Fehlergrad an dem vorgegeben Schwellwert 34 liegt, desto kleiner wird der Zeitraum t2 bis t2` zur Zurückhaltung der Ansteuersignale gewählt.

Der Zeitraum wird beispielsweise durch ein Timeout definiert, d.h. hierzu wird eine vom Fehlergrad abhängige Zeitdauer von t2 bis t2`definiert, wobei mit Ablauf der Zeitdauer zum Zeitpunkt t2' die Ansteuersignale wieder an die Anzeigeeinheit ausgegeben werden. Sobald der Fehlergrad unter den vorgegebenen Schwellwert sinkt, d.h. auch vor t2' bzw. vor Ablauf der Zeitdauer bzw. vor Erreichen des Timeouts werden die Ansteuersignale dementsprechend wieder fortlaufend ausgegeben.

Im Zeitraum nach t3 bis tend liegt der Fehlergrad 32 wieder unterhalb dem Schwellwert 34, damit werden die aus den Eingabepositionen ermittelten Ansteuersignale wieder mit jedem Rechenzyklus verzögerungsfrei an die Anzeigeeinheit übermittelt. Im Falle, dass die Zurückhaltung wie vorab beschrieben durch einen Zeitablauf bereits vor t3 zum Zeitpunkt t2' beendet wird erfolgt dementsprechend bereits im Zeitraum von t2' bis tend die Übermittlung der Ansteuersignale an die Anzeigeeinheit.

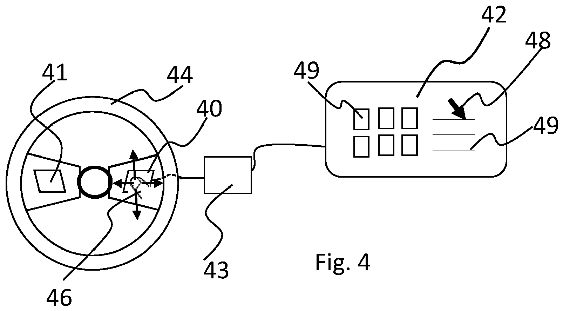

In Flg.4 ist eine Vorrichtung zur Ausführung des vorab beschriebenen Verfahrens dargestellt. Die Vorrichtung umfasst berührempfindliche Eingabeflächen 40, 41, die mit einer Anzeigeeinheit 42 über Auswertemittel 43 verbunden sind. Die Eingabeflächen 40,41 sind dabei auf einem Lenkrad 44 angeordnet und mit einem Finger, vorliegend mit einem Daumen 46 durch Wischbewegungen bedienbar. Über durch Pfeile dargestellte beliebige Bewegungen des Daumens 46 wird ein als Cursor ausgeführtes Anzeigeelement 48 zur Selektion eines Objektes 49, das beispielsweise als Icon oder Liste ausgebildet ist, ausgewählt. Mit der Selektion des Objekts 49 wird dieses optisch kenntlich gemacht. In einer Ausführungsform wird mit der Kenntlichmachung bereits eine zugeordnete Funktion ausgeführt, in einer alternativen Ausführungsform bewirkt erst eine weitere Bedienhandlung wie eine Auslösen einen Schaltfunktion mittels einer Druckerhöhung auf das Eingabefeld 40 die Ausführung der dem Objekt 49 zugeordneten Funktion.

## Patentansprüche

1. Verfahren zur Auswertung von Bediengesten auf einer berührungsempfindlichen Eingabefläche zur Steuerung eines zur Selektion eines Objekts ausgebildeten Anzeigeelements auf einer der Eingabefläche zugeordneten Anzeigeeinheit mit folgenden Schritten:
- Ermittlung der einer Bediengeste zugehörigen charakteristischen Daten im Zeitraum von einem Zeitpunkt t1 bis zu einem Zeitpunkt tend, mit t1 < tend (S1),
- kontinuierliche Bestimmung von Verschiebevektoren aufweisenden Ansteuersignalen aus den von den charakteristischen Daten umfassten Eingabepositionen von POS(t1) bis POS(tend) zur Steuerung des Anzeigeelements auf der Anzeigeeinheit (S3)
- parallel zur kontinuierlichen Bestimmung von Verschiebevektoren aufweisenden Ansteuersignalen erfolgt eine Auswertung der der Bediengeste zugehörigen charakteristischen Daten und Klassifizierung der Geste hinsichtlich eines Fehlergrads (S5) mittels einem vortrainierten Algorithmus, wobei
- sofern der Fehlergrad unterhalb einem vorgegebenen Schwellwert liegt (S7), die aus Eingabepositionen bestimmten Verschiebevektoren umfassenden Ansteuersingale fortlaufend an die Anzeigeeinheit übermittelt (S9) werden
**dadurch gekennzeichnet, dass**
sofern der Fehlergrad (S7) in einem Zeitraum von t2 bis t3 mit t1<t2<t3≤tend oberhalb dem vorgegebenen Schwellwert liegt, die Übermittlung der im Zeitraum von t2 bis t3 bestimmten Ansteuersignale ausgesetzt wird

2. Verfahren nach Anspruch 1,
**dadurch gekennzeichnet, dass**
die Übermittlung der im Zeitraum von t2 bis t3 bestimmten Ansteuersignale nur in einem Zeitraum von t2 bis t2' mit t2'<t3 ausgesetzt wird, sofern ein Timer zum Zeitpunkt t2' abläuft.

3. Verfahren nach Anspruch 1,
**dadurch gekennzeichnet, dass**
die Übermittlung der im Zeitraum von t2 bis t3 bestimmten Ansteuersignale nur in einem Zeitraum von t2 bis t2' mit t2'<t3 in Abhängigkeit des Fehlergrades ausgesetzt wird, wobei
der Zeitraum von t2 bis t2' mit t2'≤t3, in dem die Ansteuersignale zurückbehalten werden, umso größer gewählt wird, desto größer der Fehlergrad der Geste ist.

4. Verfahren nach Anspruch 1,
**dadurch gekennzeichnet, dass**
zusätzlich zum Fehlergrad auf Basis der charakteristischen Daten mittels einem vortrainierten Algorithmus eine Bewegungsrichtung klassifiziert wird.

5. Verfahren nach Anspruch 4,
**dadurch gekennzeichnet, dass**
sofern der ermittelte Fehlergrad oberhalb dem vorgegebenen Fehlergrad liegt und die von dem vortrainierten Algorithmus ausgegebene der aus den Eingabepositionen POS(t1) bis POS(tend) ermittelten Bewegungsrichtung entspricht, die Übermittlung der im Zeitraum von t2 bis t3 bestimmten Ansteuersignale nur in einem Zeitraum von t2 bis t2' mit t2'<t3 ausgesetzt wird.

6. Verfahren nach Anspruch 4 oder 5,
**dadurch gekennzeichnet, dass**
sofern die vom vortrainierten Algorithmus ausgegebene Bewegungsrichtung eindeutig ist, die aus den Eingabepositionen POS(t1) bis POS(tend) ermittelte Bewegungsrichtung durch die vom vortrainierten Algorithmus erkannte Bewegungsrichtung überschrieben wird.

7. Verfahren nach einem der Ansprüche 1 bis 6,
**dadurch gekennzeichnet, dass**
die charakteristischen Daten von einem mit Bediengesten vorab trainierten, als neuronales Netzwerk ausgebildeten Algorithmus ausgewertet und klassifiziert werden.

8. Verfahren nach einem der Ansprüche 1 bis 7,
**dadurch gekennzeichnet, dass**
die charakteristischen Daten zur Klassifizierung der Bediengeste zusätzlich eine Fingerauflagefläche, eine Fingerauflagekraft und/oder Fingerbeweggeschwindigkeit umfassen.

9. Vorrichtung mit Mitteln zur Auswertung von Bediengesten auf einer berührungsempfindlichen Eingabefläche (40, 41), die zur Steuerung eines zur Selektion eines Objekts (49) ausgebildeten Anzeigeelements (48) auf einer der Eingabefläche zugeordneten Anzeigeeinheit (42) ausgebildet ist, wobei die Mittel (43) einer Bediengeste zugehörige charakteristische Daten von einem Zeitpunkt t1 bis zu einem Zeitpunkt tend, mit t1 < tend ermitteln und kontinuierlich Verschiebevektoren aufweisende Ansteuersignale aus den von den charakteristischen Daten umfassten Eingabepositionen von POS(t1) bis POS(tend) bestimmen,
wobei
parallel zur kontinuierlichen Bestimmung der Verschiebevektoren aufweisenden Ansteuersignale die Mittel (43) die charakteristischen Daten auswerten und die Geste fortlaufend anhand einem vortrainierten Algorithmus hinsichtlich eines Fehlergrads klassifizieren,
wobei
solange der Fehlergrad unterhalb einem vorgegebenen Schwellwert liegt, die Mittel (43) die aus den Eingabepositionen bestimmten Ansteuersignale zur Steuerung des Anzeigeelements (48) fortlaufend an die Anzeigeeinheit (42) übermitteln
**dadurch gekennzeichnet, dass**
sofern der Fehlergrad in einem Zeitraum von t2 bis t3 mit t1<t2<t3≤tend oberhalb dem vorgegebenen Schwellwert liegt, die Übermittlung der im Zeitraum von t2 bis t3 bestimmten Ansteuersignale ausgesetzt (S3) wird.

## Claims

1. Method for evaluating operating gestures on a touch-sensitive input surface for controlling a display element designed for selecting an object on a display unit associated with the input surface, comprising the following steps:
- ascertaining the characteristic data associated with an operating gesture in the time period from a time t1 to a time tend, t1 being < tend (S1),
- continuously determining control signals having displacement vectors from the input positions of POS(t1) to POS(tend) included in the characteristic data for controlling the display element on the display unit (S3)
- parallel to continuously determining control signals having displacement vectors, evaluating the characteristic data associated with the operating gesture and classifying the gesture with respect to a degree of error (S5) by means of a pretrained algorithm,
- if the degree of error is below a prespecified threshold value (S7), the control inputs comprising displacement vectors determined from input positions being continuously transmitted to the display unit (S9)
**characterized in that**
if the degree of error (S7) in a time period from t2 to t3, where t1 <t2<t3≤tend, is above the prespecified threshold value, the transmission of the control signals determined in the time period from t2 to t3 is suspended.

2. Method according to claim 1,
**characterized in that**
the transmission of the control signals determined in the time period from t2 to t3 is only suspended in a period from t2 to t2`, t2' being <t3, provided that a timer expires at time t2`.

3. Method according to claim 1,
**characterized in that**
the transmission of the control signals determined in the time period from t2 to t3 is only suspended in a time period from t2 to t2`, t2' being <t3, on the basis of the degree of error,
the longer the time period from t2 to t2`, t2' being ≤t3, in which the control signals are retained, being chosen, the greater the degree of error of the gesture.

4. Method according to claim 1,
**characterized in that**
a movement direction is classified in addition to the degree of error on the basis of the characteristic data by means of a pretrained algorithm.

5. Method according to claim 4,
**characterized in that**
if the ascertained degree of error is above the prespecified degree of error and the movement direction output by the pretrained algorithm corresponds to the movement direction ascertained from the input positions POS(t1) to POS(tend), the transmission of the control signals determined in the time period from t2 to t3 is only suspended in a time period from t2 to t2`, t2' being <t3.

6. Method according to either claim 4 or claim 5,
**characterized in that**
if the movement direction output by the pretrained algorithm is clear, the movement direction ascertained from the input positions POS(t1) to POS(tend) is overwritten by the movement direction detected by the pretrained algorithm.

7. Method according to any of claims 1 to 6,
**characterized in that**
the characteristic data are evaluated and classified by an algorithm designed as a neural network that has been pretrained with operating gestures.

8. Method according to any of claims 1 to 7,
**characterized in that**
the characteristic data for classifying the operating gesture additionally comprise a finger contact surface, a finger contact force, and/or a finger movement speed.

9. Device comprising means for evaluating operating gestures on a touch-sensitive input surface (40, 41), which is designed to control a display element (48) designed for selecting an object (49) on a display unit (42) associated with the input surface, wherein the means (43) ascertain characteristic data associated with an operating gesture from a time t1 up to a time tend, t1 being < tend,
and continuously determine control signals having displacement vectors from the input positions of POS(t1) to POS(tend) included in the characteristic data,
parallel to continuously determining the control signals having displacement vectors, the means (43) evaluating the characteristic data, and continuously classifying the gesture with respect to a degree of error using a pretrained algorithm,
if the degree of error is below a prespecified threshold value, the means (43) continuously transmitting the control signals determined from the input positions for controlling the display element (48) to the display unit (42)
**characterized in that**
if the degree of error in a time period from t2 to t3, where t1<t2<t3≤tend, is above the prespecified threshold value, the transmission of the control signals determined in the time period from t2 to t3 is suspended (S3).

## Revendications

1. Procédé permettant d'évaluer des gestes de contrôle sur une surface d'entrée tactile pour la commande d'un élément d'affichage conçu pour la sélection d'un objet sur une unité d'affichage associée à la surface d'entrée, comportant les étapes suivantes :
- détermination des données caractéristiques associées à un geste de contrôle dans une période allant d'un instant t1 jusqu'à un instant tend, t1 étant < tend (S1),
- détermination continue de signaux de commande présentant des vecteurs de déplacement à partir des positions d'entrée comprises par les données caractéristiques, de POS(t1) à POS(tend) pour la commande de l'élément d'affichage sur l'unité d'affichage (S3)
- parallèlement à la détermination continue de signaux de commande présentant des vecteurs de déplacement, une évaluation des données caractéristiques associées au geste de contrôle et une classification du geste eu égard à un degré d'erreur (S5) au moyen d'un algorithme pré-entraîné ont lieu, dans lesquelles
- pour autant que le degré d'erreur soit inférieur à une valeur seuil prédéfinie (S7), les signaux de commande comprenant les vecteurs de déplacement déterminés à partir des positions d'entrée sont transmis en continu à l'unité d'affichage (S9),
**caractérisé en ce que**
pour autant que le degré d'erreur (S7), dans une période allant de t2 à t3, où t1<t2<t3≤tend, soit supérieur à la valeur seuil prédéfinie, la transmission des signaux de commande déterminés dans la période de t2 à t3 est suspendue.

2. Procédé selon la revendication 1,
**caractérisé en ce que**
la transmission des signaux de commande déterminés dans la période de t2 à t3 n'est suspendue que dans une période de t2 à t2`, t2' étant <t3, pour autant qu'un minuteur expire à l'instant t2'.

3. Procédé selon la revendication 1,
**caractérisé en ce que**
la transmission des signaux de commande déterminés dans la période de t2 à t3 n'est suspendue que dans une période de t2 à t2`, t2' étant <t3, en fonction du degré d'erreur, dans lequel
la période de t2 à t2`, t2`étant ≤t3, pendant laquelle les signaux de commande sont retenus étant choisie d'autant plus grande que le degré d'erreur du geste est élevé.

4. Procédé selon la revendication 1,
**caractérisé en ce que**
un sens de déplacement est classifié à l'aide d'un algorithme pré-entraîné en plus du degré d'erreur, sur la base des données caractéristiques.

5. Procédé selon la revendication 4,
**caractérisé en ce que**
pour autant que le degré d'erreur déterminé soit supérieur au degré d'erreur spécifié et que le sens de déplacement émis par l'algorithme pré-entraîné corresponde à celui déterminé à partir des positions d'entrée POS(t1) à POS(tend), la transmission des signaux de commande déterminés dans la période de t2 à t3 n'est suspendue que dans une période de t2 à t2`, t2` étant <t3.

6. Procédé selon la revendication 4 ou 5,
**caractérisé en ce que**
pour autant que le sens de déplacement émis par l'algorithme pré-entraîné soit clair, le sens de déplacement déterminé à partir des positions d'entrée POS(t1) à POS(tend) est écrasé par le sens de déplacement détecté par l'algorithme pré-entraîné.

7. Procédé selon l'une des revendications 1 à 6,
**caractérisé en ce que**
les données caractéristiques sont évaluées et classifiées par un algorithme pré-entraîné par des gestes de contrôle, conçu en tant que réseau neuronal.

8. Procédé selon l'une des revendications 1 à 7,
**caractérisé en ce que**
les données caractéristiques pour la classification du geste de contrôle comprennent en plus une surface d'appui de doigt, une force d'appui de doigt et/ou une vitesse de déplacement de doigt.

9. Dispositif comportant des moyens permettant d'évaluer des gestes de contrôle sur une surface d'entrée tactile (40, 41), qui est conçue pour la commande d'un élément d'affichage (48) conçu pour la sélection d'un objet (49) sur une unité d'affichage (42) associée à la surface d'entrée, les moyens (43) déterminant des données caractéristiques associées à un geste de contrôle à partir d'un instant t1 jusqu'à un instant tend, t1 étant < tend
et déterminant en continu des signaux de commande présentant des vecteurs de déplacement à partir des positions d'entrée, incluses dans les données caractéristiques, de POS(t1) à POS(tend),
dans lequel
parallèlement à la détermination continue des signaux de commande, présentant des vecteurs de déplacement, les moyens (43) évaluent les données caractéristiques et classifient le geste en continu à l'aide d'un algorithme pré-entraîné eu égard à un degré d'erreur,
dans lequel
tant que le degré d'erreur est inférieur à une valeur seuil prédéfinie, les moyens (43) transmettent les signaux de commande déterminés à partir des positions d'entrée pour la commande de l'élément d'affichage (48) en continu à l'unité d'affichage (42)
**caractérisé en ce que**
pour autant que le degré d'erreur, dans une période allant de t2 à t3, où t1<t2<t3≤tend, se situe au-dessus de la valeur seuil prédéfinie, la transmission des signaux de commande déterminés dans la période de t2 à t3 est suspendue (S3).
